# EUROPÄISCHE PATENTSCHRIFT

(11) **EP 2 684 181 B1**
(45) Veröffentlichungstag und Bekanntmachung des Hinweises auf die Patenterteilung: **10.12.2014**
(21) Anmeldenummer: 12723077.9
(22) Anmeldetag: 12.03.2012
(51) Int. Cl.: G09F 21/02, A44C 3/00, G09F 3/18

(54) **PLAKETTE**
BADGE
INSIGNE

(30) Priorität: 10.03.2011 AT 1322011
(43) Veröffentlichungstag der Anmeldung: 15.01.2014
(73) Patentinhaber: Schmitz, Hannes, 1200 Wien (AT)
(72) Erfinder: Schmitz, Hannes, 1200 Wien (AT)
(74) Vertreter: Ellmeyer, Wolfgang
(86) Internationale Anmeldenummer: PCT/AT2012/050032
(87) Internationale Veröffentlichungsnummer: WO 2012/119177

(56) Entgegenhaltungen:
- WO-A1-96/35346
- DE-U1- 8 620 247
- US-A1- 2009 145 008
- US-B1- 6 393 686

## Beschreibung

Die Erfindung betrifft eine Plakette mit einem Unterteil, der eine Vorrichtung zum Fixieren umfasst, einem Auflageteil, auf dem ein Informationsträger aufbringbar oder auflegbar ist, und einem transparenten Abdeckteil, wobei das Unterteil und das Auflageteil entlang ihrem Umfang miteinander verbunden sind, wobei zumindest zwei aus dem Unterteil, dem Auflageteil, dem Abdeckteil und dem Informationsträger aus einem vollständig biologisch abbaubaren Material gebildet sind.

Bisher wurden Plaketten bzw. Anstecker (engl. Buttons) hauptsächlich aus Metallteilen in Kombination mit Kunststoffen gefertigt, die in vielen Fällen bedingt durch die geringe Gebrauchsdauer solcher Plaketten, sei es auf Konferenzen, Konzerten, politischen Veranstaltungen od. dgl. bereits nach kurzer Zeit als schlecht recyclierbarer Müll anfallen.

Es gab bereits Untersuchungen und Versuche mit "Wood Plastic Composits" (WPC) für Plaketten. Als Bindemittel wurde Polypropylen eingesetzt, das jedoch nicht biologisch abbaubar ist, wodurch die Entsorgung weiterhin als problembehaftet zu bezeichnen war. Der Polypropylen-Anteil dieser Plaketten betrug zwischen 20 und 50 %, der Anteil an Holz des WPC-Materials bestand aus groben Holzspänen.

In der US 6 393 686 B1 ist eine Plakette mit Unterteil, Auflageteil, Informationsträger und Abdeckteil aus herkömmlichen, nicht verrottbaren Materialien angegeben.

Eine bio-abbaubare Plakette ist in der US 2009/0145008 in Form eines faltbaren durchsichtigen Umschlags zur Aufnahme eines Namenschilds beschrieben, der mit einem Umhängeband verbindbar ist. Aufgrund der linienförmigen Faltkante ist hauptsächlich eine Anwendung für rechteckförmige Schilder vorgegeben. Verbindungen wie Polyethylenterephthalat und Polymilchsäure ermöglichen eine schnelle Abbaubarkeit nach Entsorgung.

Die DE 86 20 247 U1 offenbart eine an der Kleidung anbringbare plattenförmige Plakette, bei der eine Scheibe in einem kreisringförmigen Bund aufliegt und von vorstehenden Halterungen gehalten ist, wodurch keine unmittelbare randseitige Verbindung oder Verpressung zwischen Scheibe und Bund gegeben und die Scheibe vielmehr bilderrahmenartig fixiert ist. Da kein Verpressvorgang vorgenommen wird, ist keine besondere Materialwahl für Scheibe und Bund erforderlich.

Aus der WO 96/35346 geht eine Plakette mit einem einstückigen, elastischen Auflageteil hervor, der an seiner Vorderseite einen vorstehenden Umfangsrand mit einer Hinterschneidung aufweist, in die ein durch Aufwölben vorgespannter Informationsträger eingesetzt werden kann. Als Grundmaterial für den Auflageteil ist Polyethylen angegeben. Der Umfangsrand nimmt anteilsmäßig relativ viel Platz in Anspruch.

Aufgabe der Erfindung ist es daher, eine Plakette der eingangs genannten Art anzugeben, die bei ihrer Herstellung einen schonenden Umgang mit Ressourcen ermöglicht und die bei ihrer Beseitigung eine hohe Umweltverträglichkeit aufweist.

Weitere Aufgabe der Erfindung ist es, eine leicht verrottbare Plakette anzugeben, die mittels einer herkömmlichen Buttonpresse zusammengefügt werden kann.

Erfindungsgemäß wird dies dadurch erreicht, dass das Unterteil und/oder das Auflageteil einen Holzanteil in Form von Holzmehl in einem Bereich von 15% bis 50% und ein Biopolymer auf Basis eines biologisch abbaubaren, aliphatisch aromatischen Copolyesters mit einem Anteil von 25% enthält bzw. enthalten, und dass der Biege-E-Modul des Unterteils mehr als das Zweifache des Biege-E-Moduls des Auflageteils beträgt.

Durch den Holzanteil in Form von Holzmehl und den Biopolymeranteil lässt sich eine gute Kompostierbarkeit oder Brennbarkeit der erfindungsgemäßen Plakette erzielen, sodass diese leicht entsorgt werden kann, ohne dass ein zusätzlicher Energieaufwand für die Materialtrennung oder die Wiedergewinnung, z.B. durch Aufschmelzen oder Lösungsprozesse entsteht. Aufgrund des mehrteiligen Aufbaus ist es besonders vorteilhaft, möglichst viele der Teile der erfindungsgemäßen Plakette aus einem biologisch abbaubaren Material auszubilden.

Ferner wird durch die unterschiedlichen E-Module von Unterteil und Auflageteil eine besonders vorteilhafte Verpressung erzielt.

Weiters kann das biologisch abbaubare Material spritzgießbar sein kann, um eine Herstellung durch Spritzgießen zu ermöglichen.

Sofern das biologisch abbaubare Material in Form eines Spritzgussgranulats verarbeitbar ist, ergibt sich eine besonders einfache Form der Herstellung in geeigneten Spritzgießvorrichtungen.

Gemäß einem weiteren Ausführungsbeispiel der Erfindung kann die Vorrichtung zum Fixieren durch einen Bügel gebildet sein, der an der Unterseite des Unterteils im Randbereich mit einem freien Ende angeformt ist, der sich beabstandet zum Unterteil erstreckt, wobei das freie Ende des Bügels zum Anstecken der Plakette dient. Durch die Verwendung eines spritzgießbaren Materials ist diese Form der Ansteckhilfe zugleich mit der Herstellung des Unterteils verwirklichbar. Es kann aber auch alternativ dazu eine metallische Anstecknadel verwendet werden, die das Unterteil eingeformt wird, wodurch der Metallanteil der erfindungsgemäßen Plakette noch immer relativ klein gehalten wird.

Weiters kann in Erstreckungsrichtung des Bügels ein Langloch im Unterteil ausgebildet sein und der Bügel eine konkav geschwungene Form aufweisen, sodass der Mittelteil des Bügels in einem kleineren Abstand zum Unterteil als dessen freies Ende verläuft. Damit kann eine ausreichende Klemmwirkung z.B. an einem Kleidungsstück durch das Anstecken der erfindungsgemäßen Plakette erzielt werden, sodass der Bügel aufgrund seiner Federwirkung z.B. den Stoffbereich in das Langloch drückt und somit die Plakette besser gegen ein Abstreifen gesichert ist.

Die Anwendung der erfindungsgemäßen Plakette ist aber nicht auf das Anstecken auf Kleidungsstücken beschränkt, vielmehr kann diese an beliebige Gegenstände, z.B. auch Schuhe oder elektronische Geräte angesteckt werden.

In Weiterbildung der Erfindung kann das Unterteil der erfindungsgemäßen Plakette im Wesentlichen ebenflächig ausgebildet sein und entlang des Umfangs eine Randwölbung zum Verbindungseingriff mit dem Auflageteil aufweisen.

In Entsprechung dazu kann gemäß einer weiteren Ausführungsform der Erfindung das Auflageteil in Form einer gewölbten Scheibe ausgebildet sein, die zusätzlich eine Randwölbung zum Verbindungseingriff mit dem Unterteil aufweist. Auf diese Weise kann durch Anwendung eines Verpressvorgangs zwischen Auflageteil und Unterteil ein entsprechender transparenter Abdeckteil eingeklemmt werden, der den auf dem Auflageteil aufliegenden Informationsträger gegen äußere Einflüsse schützt.

Gemäß einer weiteren Ausbildung der Erfindung kann die Plakette in ovaler oder vieleckiger Oberfläche, z.B. rund, oval, 4-, 6- oder 8-eckig gestaltet sein.

Eine weitere Variante der Erfindung kann darin bestehen, dass die Plakette, insbesondere Unterteil und Auflageteil mittels einer Buttonpresse verpresst ist.

Um dies zu ermöglichen kann der Außendurchmesser d1 des Unterteils kleiner als der Innendurchmesser d2 des Auflageteils sein.

Das Unterteil wird dabei so mit Untermaß gegenüber dem Auflageteil gefertigt, dass das Abdeckteil und gegebenenfalls der Informationsträger randseitig im Umfangsbereich zwischen dem Unterteil und dem Auflageteil, vorzugsweise mit Spiel einbringbar sind und dann das Unterteil und das Auflageteil miteinander verpresst werden.

Es hat sich herausgestellt, dass das Verpressen mit der Buttonpresse vorteilhaft durchführbar ist, wenn das Unterteil und das Auflageteil, die aus einem biologisch abbaubaren Material bestehen, unterschiedliche Steifigkeiten aufweisen. Das Auflageteil behält nach dem Verpressvorgang seine Verformung im Randbereich bei, wodurch das Abdeckteil zwischen Auflageteil und Unterteil dauerhaft eingespannt bleibt.

Eine weitere Ausbildung der Erfindung kann darin bestehen, dass der Biege-E-Modul des Auflageteils im Bereich von 1500 MPa bis 1900 MPa liegt, besonders bevorzugt 1700 MPa ist, und dass der Biege-E-Modul des Unterteils im Bereich von 3800 MPa bis 4200 MPa liegt, besonders bevorzugt 4000 MPa ist.

Nachfolgend wird die Erfindung anhand des in Zeichnungen dargestellten Ausführungsbeispiels eingehend erläutert. Es zeigt dabei
Fig.1 einen Schnitt AA durch eine Ausführungsform eines Unterteils der erfindungsgemäßen Plakette;
Fig.2 eine Draufsicht von unten auf das Unterteil gemäß Fig.1;
Fig.3 eine Draufsicht auf eine Ausführungsform eines Auflageteils der erfindungsgemäßen Plakette;
Fig.4 einen Schnitt AA durch das Auflageteil gemäß Fig.3;
Fig.5 ein Detail des Auflageteils gemäß Fig.3 und
Fig.6 einen Schnitt durch eine aus dem Unterteil gemäß Fig1. und 2 sowie aus einem Auflageteil gemäß Fig. 3, 4 und 5 zusammengesetzte Plakette, die noch nicht verpresst ist.

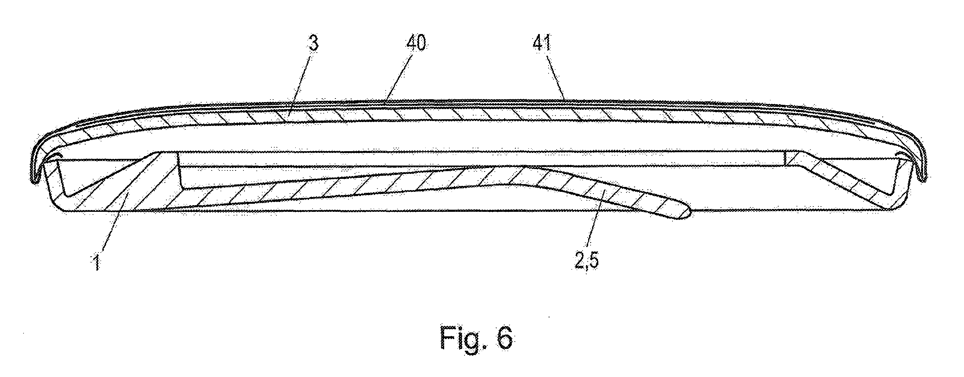

Fig. 6 zeigt eine Ausführungsform einer erfindungsgemäßen Plakette in zusammengesetztem Zustand, die im Wesentlichen aus einem Unterteil 1, einer Vorrichtung zum Fixieren 2, einem Auflageteil 3, auf dem ein Informationsträger 40 aufgebracht ist und einem Abdeckteil 41 besteht, wobei das Unterteil 1 und das Auflageteil 2 durch einen Pressvorgang entlang ihrem Umfang miteinander verbunden werden können. Mindestens zwei der genannten Teile sind aus einem biologisch abbaubaren Material hergestellt.

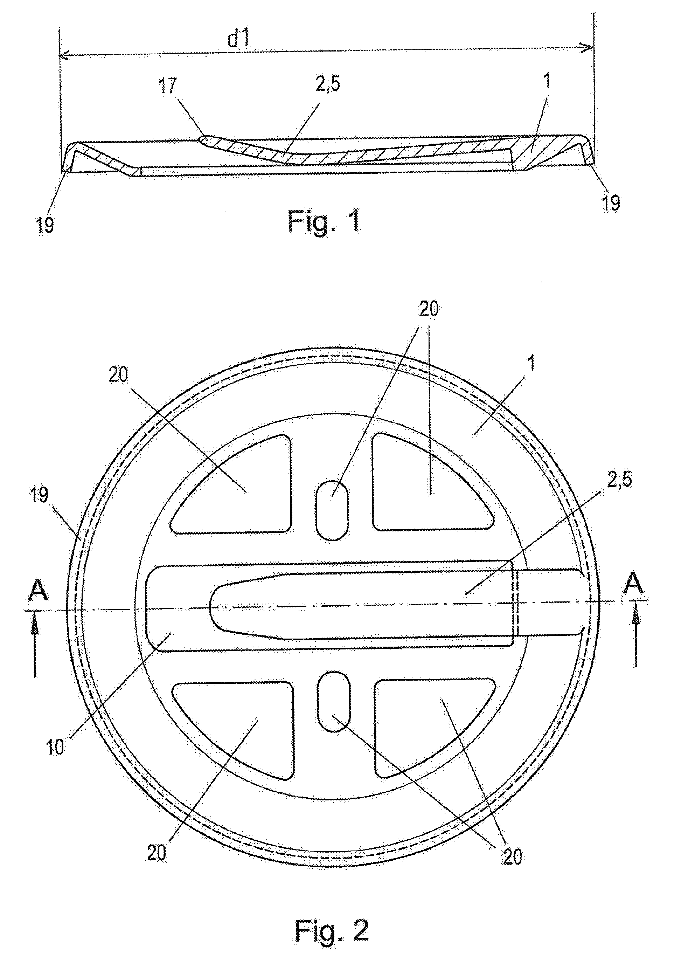

Fig.1 und 2 zeigen das Unterteil 1 der erfindungsgemäßen Plakette, das aus einem vollständig biologisch abbaubaren Material gebildet ist, das bevorzugt spritzgießbar ist.

Vorzugsweise ist das abbaubare Material durch ein Biopolymer gebildet, z.B. aus einem Polysaccharid auf Basis von Zellulose, Stärke, Chitin, Holz, Gras, Reisstroh, Mais, Baumwolle od. dgl. gebildet.

Bevorzugt ist bzw. sind das Unterteil 1 und/oder das Auflageteil 3 aus dem biologisch abbaubaren Material gebildet, das maximal 70%, vorzugsweise in einem Bereich von 15% bis 50% Holzanteil, vorzugsweise Holzmehl enthält, wodurch eine sehr umweltverträgliche Entsorgung gewährleistet ist.

Als weiteres biologisch abbaubares Material ist ein Biopolymer auf Basis eines biologisch abbaubaren, aliphatisch aromatischen Copolyesters, z.B. mit einem Anteil von 25% in dem Unterteil 1 bzw. dem Auflageteil 3 enthalten.

Schließlich sind noch weitere Biopolymere in dem biologisch abbaubaren Material des Unterteils 1 bzw. des Auflageteils 3 enthalten, z.B. aus Polymilchsäure oder Polylactid.

Gemäß einer weiteren Ausführungsform der erfindungsgemäßen Plakette ist das Unterteil 1 und das Auflageteil 3 aus einem aus Baumwolle und Holz hergestellten Zelluloseacetat gebildet.

Es kann aber auch jedes andere biologisch abbaubare Material, das spritzgießfähig ist bzw. als Spritzgussgranulat verarbeitbar ist, verwendet werden.

An der Unterseite des Unterteils 1 ist die Vorrichtung zum Fixieren 2 in Form eines Bügels 5 im Randbereich mit einem freien Ende 17 angeformt, der sich beabstandet zum Unterteil 1 erstreckt, wobei das freie Ende 17 des Bügels 5 zum Anstecken der zusammengesetzten Plakette dient.

In Erstreckungsrichtung des Bügels 5 ist ein Langloch 10 im Unterteil 1 ausgebildet. Der Bügel 5 weist eine konkav geschwungene Form auf, wobei der Mittelteil des Bügels 5 in einem kleineren Abstand zum Unterteil 1 als dessen freies Ende 17 verläuft.

Neben dem Langloch 10 sind weitere Löcher 20 vorgesehen, um bei ausreichender Materialdicke ein relativ geringes Gewicht des Unterteils 1 zu ermöglichen.

Es sind weitere Befestigungsmöglichkeiten des Ansteckers möglich wie z.B. Sicherheitsnadeln, Dorn mit Federklemme, Magneten, Krokodilklemmen usw.

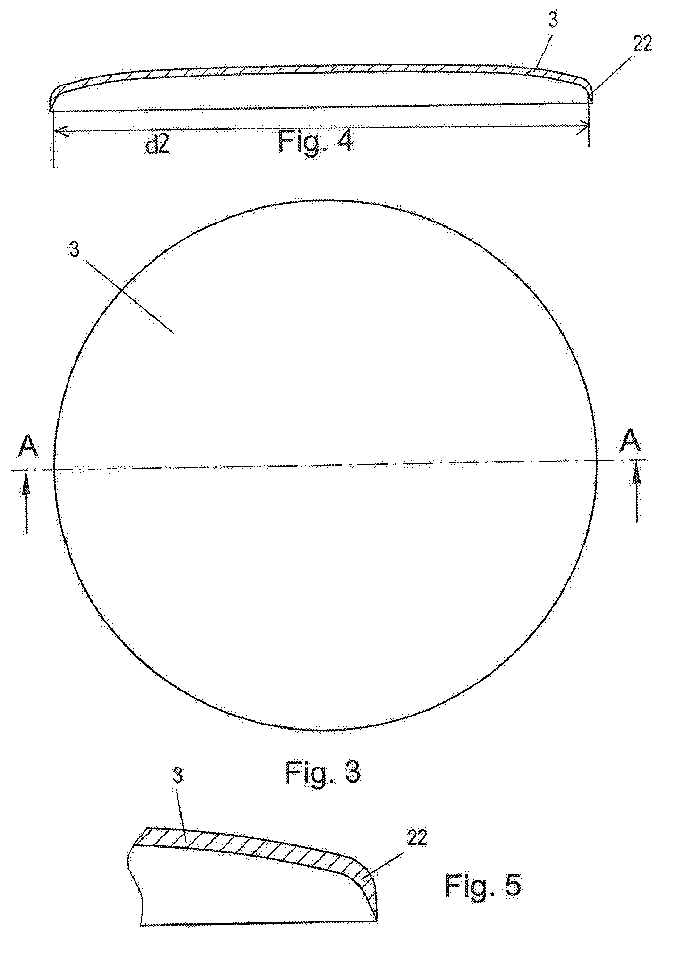

Das Unterteil 1 ist im Wesentlichen ebenflächig ausgebildet und weist entlang des Umfangs eine Randwölbung 19 zum Verbindungseingriff mit dem Auflageteil 3 auf, das in Fig. 3, 4 und 5 gezeigt ist.

Das Auflageteil 3 ist aus einem biologisch abbaubaren Material hergestellt und in Form einer gewölbten Scheibe ausgebildet, die zusätzlich eine Randwölbung 22 zum Verbindungseingriff mit dem Auflageteil 3 aufweist. Als biologisch abbaubares Material können die gleichen vorgenannten spritzgießbaren Materialien verwendet werden, wie sie vorstehend für das Unterteil 1 angegeben sind.

Fig. 6 zeigt die unverpresste, erfindungsgemäße Plakette, bei der das Unterteil 1 mit Spiel in dem Auflageteil 3 aufgenommen ist. An den Randwölbungen des Unterteils 1 und des Auflageteils 3 ist das Abdeckteil 41 in Form einer transparenten Folie eingebracht, wodurch ein Informationsträger 40, hier ein bedruckter Papierstreifen zwischen dem Auflageteil 3 und dem Abdeckteil 41 gehalten ist, der so durch das Abdeckteil 41 für einen Betrachter sichtbar ist. Auf dem Papierstreifen kann ein Slogan oder ein Logo oder eine sonstige Nachricht ersichtlich sein, welche die Plakette übermitteln soll.

Der Informationsträger 40 kann auch in Form eines Aufdrucks auf dem Auflageteil 3 realisiert sein.

Als biologisch abbaubares Material für das Abdeckteil 41 können die gleichen vorgenannten spritzgießbaren Materialien verwendet werden, wie sie vorstehend für das Unterteil 1 und das Auflageteil 3 angegeben sind.

Der Informationsträger 40 wird auch aus biologisch abbaubarem Material hergestellt wie z.B. kompostierbaren Papier das zumindest die Bestandteile Polysaccharid und/oder Polylactid enthalten.

Um die Herstellung der erfindungsgemäßen Plakette mittels einer bekannten Buttonpresse zu ermöglichen, ist der Außendurchmesser d1 (Fig.1) des Unterteils 1 kleiner als der Innendurchmesser d2 (Fig.4) des Auflageteils 3.

Es gilt daher d1 < d2.

Insbesondere wird das Unterteil 1 so mit Untermaß gegenüber dem Auflageteil 3 gefertigt, dass das Abdeckteil 41 und gegebenenfalls der Informationsträger 40 randseitig - in der Schnittdarstellung gemäß Fig.6 an gegenüberliegenden Umfangstellen -, bevorzugt mit Spielabstand, zwischen dem Unterteil 1 und dem Auflageteil 3 eingebracht werden kann bzw. können. Beim Pressvorgang wird das Auflageteil 3 im Umfangsbereich so in Richtung Umfangsbereich des Unterteils 1 bleibend verformt, dass das Abdeckteil 41 und gegebenenfalls der Informationsträger randseitig zwischen den Umfangsbereichen des Auflageteils 3 und des Unterteils 1 geklemmt ist bzw. sind. Um den Pressvorgang in dieser Form zu ermöglichen, weisen das Unterteil 1 und das Auflageteil 3, die erfindungsgemäß aus einem biologisch abbaubaren Material hergestellt sind, unterschiedliche Steifigkeiten auf.

Zu diesem Zweck ist der Biege-E-Modul des Unterteils 1 größer als der Biege-E-Modul des Auflageteils 2, insbesondere ist der Biege-E-Modul des Unterteils 1 mehr als Zweifache des Biege-E-Moduls des Auflageteils 2.

Bevorzugt liegt der Biege-E-Modul des Auflageteils 2 im Bereich von 1500 MPa bis 1900 MPa, besonders bevorzugt 1700 MPa, und der Biege-E-Modul des Unterteils 1 liegt im Bereich von 3800 MPa bis 4200 MPa, besonders bevorzugt 4000 MPA.

## Patentansprüche

1. Plakette mit einem Unterteil (1), der eine Vorrichtung zum Fixieren (2) umfasst, einem Auflageteil (3), auf dem ein Informationsträger (40) aufbringbar oder auflegbar ist, und einem transparenten Abdeckteil (41), wobei das Unterteil (1) und das Auflageteil (3) entlang ihrem Umfang miteinander verbunden sind, wobei zumindest zwei aus dem Unterteil (1), dem Auflageteil (3), dem Abdeckteil (41) und dem Informationsträger (40) aus einem vollständig biologisch abbaubaren Material gebildet ist, **dadurch gekennzeichnet, dass** das Unterteil (1) und/oder das Auflageteil (3) einen Holzanteil in Form von Holzmehl in einem Bereich von 15% bis 50% und ein Biopolymer auf Basis eines biologisch abbaubaren, aliphatisch aromatischen Copolyesters mit einem Anteil von 25% enthält bzw. enthalten, und dass der Biege-E-Modul des Unterteils (1) mehr als Zweifache des Biege-E-Moduls des Auflageteils (2) beträgt.

2. Plakette nach einem der vorhergehenden Ansprüche, **dadurch gekennzeichnet, dass** das biologisch abbaubare Material spritzgießbar ist.

3. Plakette nach Anspruch 2, **dadurch gekennzeichnet, dass** das biologisch abbaubare Material in Form eines Spritzgussgranulats verarbeitbar ist.

4. Plakette nach Anspruch 1 oder 2, **dadurch gekennzeichnet, dass** die Vorrichtung zum Fixieren (2) durch einen Bügel (5) gebildet ist, der an der Unterseite des Unterteils (1) im Randbereich mit einem freien Ende angeformt ist, der sich beabstandet zum Unterteil (1) erstreckt, wobei das freie Ende des Bügels (5) zum Anstecken der Plakette dient.

5. Plakette nach Anspruch 4, **dadurch gekennzeichnet, dass** in Erstreckungsrichtung des Bügels (5) ein Langloch im Unterteil (1) ausgebildet ist, und dass der Bügel eine konkav geschwungene Form aufweist, sodass der Mittelteil des Bügels in einem kleineren Abstand zum Unterteil (1) als dessen freies Ende verläuft.

6. Plakette nach Anspruch 4 oder 5, **dadurch gekennzeichnet, dass** das Unterteil im Wesentlichen ebenflächig ausgebildet ist und entlang des Umfangs eine Randwölbung zum Eingriff mit dem Auflageteil (3) aufweist.

7. Plakette nach einem der vorhergehenden Ansprüche, **dadurch gekennzeichnet, dass** das Auflageteil (3) in Form einer gewölbten Scheibe ausgebildet ist, die zusätzlich eine Randwölbung zum Eingriff mit dem Unterteil (1) aufweist.

8. Plakette nach einem der vorhergehenden Ansprüche, **dadurch gekennzeichnet, dass** die Plakette in ovaler oder vieleckiger Oberfläche, z.B. rund, oval, 4-, 6- oder 8-eckig gestaltet ist.

9. Plakette nach einem der vorhergehenden Ansprüche, **dadurch gekennzeichnet, dass** sie mittels einer Buttonpresse verpresst ist.

10. Plakette nach einem der vorhergehenden Ansprüche, **dadurch gekennzeichnet, dass** der Außendurchmesser d1 des Unterteils (1) kleiner als der Innendurchmesser d2 des Auflageteils (3) ist.

11. Plakette nach Anspruch 10 **dadurch gekennzeichnet, dass** das Unterteil (1) so mit Untermaß gegenüber dem Auflageteil (3) gefertigt ist, dass das Abdeckteil (41) und gegebenenfalls der Informationsträger (40) randseitig zwischen dem Unterteil (1) und dem Auflageteil (3) einbringbar ist bzw. sind.

12. Plakette nach einem der vorhergehenden Ansprüche, **dadurch gekennzeichnet, dass** das Unterteil (1) und das Auflageteil (2) unterschiedliche Steifigkeiten aufweisen.

13. Plakette nach einem der vorhergehenden Ansprüche, **dadurch gekennzeichnet, dass** der Biege-E-Modul des Auflageteils (2) im Bereich von 1500 MPa bis 1900 MPa liegt, besonders bevorzugt 1700 MPa ist, und dass der Biege-E-Modul des Unterteils (1) im Bereich von 3800 MPa bis 4200 MPa liegt, besonders bevorzugt 4000 MPa ist.

## Claims

1. A badge which consists of a lower part (1) comprising a fixing device (2); a support part (3), on which an information carrier (40) can be applied or placed, and a transparent cover part (41), the lower part (1) and the support part (3) being connected along their periphery, **characterised in that** at least two parts selected from said lower part (1), said support part (3), said cover part (41) and said information carrier (40) are made of a completely biologically degradable material, **characterized in that** the lower part (1) and/or the support part (3) contain(s) a wood proportion in the form of wood dust in the range of 15% to 50% and a biopolymer based on a biologically degradable, aliphatic-aromatic co-polyester in an amount of 25%, and that the flexural elastic modulus of the lower part (1) is more than twice as high as that of the support part (2).

2. The badge according to any one of the preceding claims, **characterised in that** said biologically degradable material is injection-mouldable.

3. The badge according to any one of the preceding claims, **characterised in that** said biologically degradable material can be processed in the form of injection-moulded granules.

4. The badge according to claim 1 or 2, **characterised in that** said fixing device (2) is formed by a bracket (5), which is moulded to the periphery of the bottom surface of the lower part (1) and comprises a free end, said bracket (5) extending spaced apart from said lower part (1), said free end of the bracket (5) serving to pin on the badge.

5. The badge according to claim 4, **characterised in that** an elongated hole is formed in the lower part (1) along the direction in which the bracket (5) extends and **in that** the bracket (5) has a concavely curved shape, so that the distance between the middle section of the bracket and the lower part (1) is smaller than that between its free end and the lower part (1).

6. The badge according to claim 4 or 5, **characterised in that** the lower part is essentially planar and has a curved edge along its periphery for engaging with the support part (3).

7. The badge according to any one of the preceding claims, **characterised in that** the support part (3) is shaped like a curved disc which additionally has a curved edge for engaging with the lower part (1).

8. The badge according to any one of the preceding claims, **characterised in that** said badge has an oval or polygonal surface, such as a circular, oval, square, hexagonal or octagonal surface.

9. The badge according to any one of the preceding claims, **characterised in that** it is compressed by means of a button press machine.

10. The badge according to any one of the preceding claims, **characterised in that** the outer diameter d1 of the lower part (1) is smaller than the inner diameter d2 of the support part (3).

11. The badge according to claim 10, **characterised in that** the lower part (1) is dimensioned smaller than the support part (3), so that the cover part (41), and optionally the information carrier (40), may be inserted at the edge between the lower part (1) and the support part (3).

12. The badge according to any one of the preceding claims, **characterised in that** the lower part (1) and the support part (2) have different degrees of rigidity.

13. The badge according to any one of the preceding claims, **characterised in that** the flexural elastic modulus of the support part (2) ranges from 1500 MPa to 1900 MPa, particularly preferably amounting to 1700 MPa, and that the flexural elastic modulus of the lower part (1) ranges from 3800 MPa to 4200 MPa, particularly preferably amounting to 4000 MPa.

## Revendications

1. Badge avec une partie inférieure (1) qui comprend un dispositif de fixation (2), une partie de support (3) sur laquelle un support d'informations (40) peut être appliquer ou appuyer, et une partie de protection (41) transparente, ladite partie inférieure (1) et ladite partie de support (3) étant reliées le long de leur circonférence, au moins deux choisi de la partie inférieure (1), la partie de support (3), la partie de protection (41) et le support d'informations (40) consistant à une matière entièrement biodégradable, **caractérisé en ce que** la partie inférieure (1) et/ou la partie de support (3) contient/contiennent une teneur en bois sous forme de fibre ligneuse de 15 à 50 % et une teneur d'un biopolymère sur la base d'un copolyester biodégradable, aliphatique et aromatique de 25 % et **en ce que** le module d'élasticité en flexion de la partie inférieure (1) est plus que deux fois le module d'élasticité en flexion de la partie de support (2).

2. Badge selon l'une des revendications précédentes, **caractérisé en ce que** la matière biodégradable peut être moulée par injection.

3. Badge selon la revendication 2, **caractérisé en ce que** la matière biodégradable peut être façonnée sous la forme de granulés pour le moulage par injection.

4. Badge selon la revendication 1 ou 2, **caractérisé en ce que** le dispositif de fixation (2) est constitué par une branche (5) attachée au bord de la surface inférieure de la partie inférieure (1) à un de ses bouts, ladite branche (5) s'étendant écartée de la partie inférieure (1), le bout libre de ladite branche (5) servant à épingler le badge.

5. Badge selon la revendication 4, **caractérisé en ce qu'**un trou oblong est formé dans la partie inférieure (1) dans la direction dans laquelle la branche (5) s'étend et **en ce que** la branche a une forme concave, de façon que la distance entre la partie centrale de la branche et la partie inférieure (1) est inférieure à celle entre son bout libre et la partie inférieure (1).

6. Badge selon la revendication 4 ou 5, **caractérisé en ce que** la partie inférieure a une surface essentiellement plane et une courbure au bord pour être mise en prise avec la partie de support (3).

7. Badge selon l'une des revendications précédentes, **caractérisé en ce que** la partie de support (3) a la forme d'un disque courbé qui a une courbure supplémentaire au bord pour être mise en prise avec la partie inférieure (1).

8. Badge selon l'une des revendications précédentes, **caractérisé en ce que** le badge a une surface ovale ou polygonale, par exemple rond, ovale, quadrangulaire, hexagonale, octogonale.

9. Badge selon l'une des revendications précédentes, **caractérisé en ce que** le badge est pressé en utilisant une machine à badges.

10. Badge selon l'une des revendications précédentes, **caractérisé en ce que** le diamètre extérieur d1 de la partie inférieure (1) est plus petit que le diamètre intérieur d2 de la partie de support (3).

11. Badge selon la revendication 10 précédentes, **caractérisé en ce que** la partie inférieure (1) est fabriquée à un tel écart en moins par rapport à la partie de support (3) que la partie de protection (41) et facultativement le support d'informations (40) peut/peuvent être introduit(s) au bord entre la partie inférieure (1) et la partie de support (3).

12. Badge selon l'une des revendications précédentes, **caractérisé en ce que** la partie inférieure (1) et la partie de support (2) sont d'une rigidité différent.

13. Badge selon l'une des revendications précédentes, **caractérisé en ce que** le module d'élasticité en flexion de la partie de support (2) est de l'ordre de 1500 à 1900 MPa, notamment de 1700 MPa, et **en ce que** le module d'élasticité en flexion de la partie inférieure (1) est de l'ordre de 3800 MPa à 4200 MPa, notamment de 4000 MPa.
